# EUROPEAN PATENT SPECIFICATION

(11) **EP 3 256 389 B1**
(45) Date of publication and mention of the grant of the patent: **05.12.2018**
(21) Application number: 16704017.9
(22) Date of filing: 12.02.2016
(51) Int. Cl.: A23L 5/10, A23L 3/015, A23L 3/10, B65B 55/02, A23B 7/005, A23B 4/005

(54) **METHOD FOR COOKING AND STERILIZATION**
METHODE ZUM KOCHEN UND STERILISIEREN
METHODE POUR LA CUISSON ET LA STERILISATION

(30) Priority: 12.02.2015 SE 1530023
(43) Date of publication of application: 20.12.2017
(73) Proprietor: MicVac AB, 431 37 Mölndal (SE)
(72) Inventor: GUSTAVSSON, Martin, AD700 Escaldes-Engordany (AD)
(74) Representative: AWA Sweden AB
(86) International application number: PCT/EP2016/053037
(87) International publication number: WO 2016/128556

(56) References cited:
- EP-A1- 2 671 459
- WO-A1-03/076302
- FR-A1- 2 907 315
- GB-A- 1 204 092
- GB-A- 1 212 790
- US-A- 3 528 826
- US-A- 3 658 562
- US-A1- 2003 017 238
- DATABASE WPI Week 201201 Thomson Scientific, London, GB; AN 2011-K04689 XP002757860, & SE 1 000 429 A1 (HAAMER FOU AB) 2 August 2011 (2011-08-02)

## Description

### TECHNICAL FIELD OF THE INVENTION

The present disclosure relates to the field of cooking and sterilization of packed food.

### BACKGROUND

Sterilization of packed food is today commonly achieved by exposing the hermetic pack to temperature above 100°C using a counter-pressure to prevent that package to explode.

Cooking in hermetically sealed packages, commonly known as sous vide, is done for pasteurization purposes to increase the shelf life after preparation.

Pasteurization of food is defined as a 7-log reduction of bacteria. Sterilization is defined as a 12-log or higher reduction of bacteria and spores. For pasteurization of undefined (e.g. mixed) foodstuffs, a pasteurization equivalent to 90°C for 10 minutes is often required to achieve a shelf life in chilled distribution of at least one month.

Furthermore, release of organoleptic odour is very important for many foodstuffs, such as, e.g. vegetables, fish (fatty fish in particular), transformed meat (for example pates), etc. For these products, precooking prior to hermetic packaging for sous vide or sterilization is required to release these gases (aromatic odors).

### SUMMARY

It is therefore an object of the present invention to provide a method of cooking and sterilization of food arranged in a sealed package, which alleviates all or at least some of the drawbacks associated with currently known methods, such as management of organoleptic odours and process inefficiencies. The term exemplary is in the following to be interpreted as serving as an example, instance, or illustration.

This object is achieved by means of a method as defined in the appended claims.

As an aspect of the present invention there is provided a method of cooking and sterilization of food arranged in a sealed package comprising a one-way valve that opens at a pressure difference of 20-200 mbar, said method comprising the steps of:
a) heating the sealed package to cook the food;
b) subjecting the sealed package from step a) to a sub-atmospheric pressure such that gas leaves the sealed package through the valve; and
c) autoclaving the sealed package from step b) at a supra-atmospheric pressure.

Hereby, a simple and energy efficient method for cooking and sterilization or high degree pasteurization of foodstuffs in sealed packages is provided which efficiently removes organoleptic odors. The sealed package may be a package comprising plastic. For example, the package may be sealed with a plastic film. In one exemplary embodiment, the package is a plastic tray sealed with a plastic film. This method allows for releasing odours and/or gases from sealed packages while they are still relatively warm by utilizing thermodynamic effects. Autoclaving is in the present context to be understood as applying heat under pressure, e.g. sterilizing/pasteurizing by means of steam under pressure or placing in an autoclave.

The package also comprises a one-way valve that opens at a pressure difference of 20-200 mbar, such as 20-150 mbar. Such one-way valves are commercially available and for example provided by Valvopack/Nutripack (see e.g. WO0109003) and Micvac (see e.g. WO02087993, WO03076302, WO03078266, WO04106190, WO04045985, WO07091951 and WO13004586) SE1000429 discloses a packaged food cooking and sterilizing method involving packing a food in a transparent container equipped with a one-way valve that is heated in an autoclave utilizing microwaves. Pressure is generated by the steam from the food.

The sub-atmospheric pressure of step b) is preferably at least 100 millibar (mbar) below atmospheric pressure, such as at least 200, 300, 400 or 500 mbar below atmospheric pressure. In one exemplary embodiment, the pressure is never below 500 mbar to comply with some regulations and legislations. However, the sub-atmospheric pressure of step b) may also be at least 600, 700, 800 or 840 mbar below atmospheric pressure

The present inventor has realized that by using a food package with a one-way valve, one could precook and release the odours prior to the sterilization without having to repack the food. According to the inventive method, the packed food is first heated to a cooking temperature, 50-110 degrees, such as e.g. 55-80 °C or 60-75 °C, followed by a vacuum stage where gases released during cooking and oxygen is removed through the valve. Then, the package is exposed to a counter pressure and temperatures above 100 °C to achieve sterilization or high pasteurization values for long shelf life. The cooking stage, vacuum stage and sterilization stage can be performed in the same autoclave.

In one exemplary embodiment the temperature is at least 110 °C, such as at least 120 °C, in step c).

Oxygen and gaseous odours present in a package after cooking can react chemically with the food product during subsequent heat sterilization and undesirably modify the organoleptic profile of the food product. According to the method of the present disclosure, such oxygen and odours are however removed by the vacuum stage b) between the cooking stage a) and the sterilization stage c). An effect of the vacuum stage is thus that the package becomes vacuumized. By releasing the pressure after the sterilization stage c) (which is carried out at a supra-atmospheric pressure) without cooling the package, further vacuumizing of the package is achievable.

In presently known methods and systems, food packages have been vacuumized at the same time as the packages are sealed, but in such case, the odours/off-aromas released during cooking stay inside the package. Further, forming vacuum in the sealing stage are for some products tricky as there is a risk that liquids or product ends up in the seal, thereby reducing the strength of the same. Further, it is also known to pack and sterilize food after it has been cooked. In such case, the food product is often cooled to a substantial degree between cooking and heat sterilization. Such intermittent cooling wastes energy. Further, it often results in impaired taste and texture of the food product.

In contrast, the vacuum stage between the cooking and the autoclaving of the present invention normally reduces the temperature of the food product by just a few degrees, such as 2 °C, thereby increasing the energy efficiency of the process.

The inventor has performed tests with various valves on the market having opening pressures of 20-150 mbar. For some products in some packages, the valves do not open when the desired core temperature of the food product is reached unless the ambient pressure is altered as in the method of the present disclosure.

If, for example, a sealed food package is heated in an oven such that the gas phase temperature inside the package reaches 72 °C, the partial pressure of water vapour is 345 mbar. Adding the expansion of the air inside the package at this temperature, a valve having an opening pressure of 150 mbar should open. It has however been shown that this is not the case for many applications. The reason why the valve fails to open is probably that the material of the package stretches/expands and thereby increases the volume of the package and prevents the internal pressure from reaching the opening threshold. This is especially the case for a rigid package with a flexible sealing, such as a plastic film, or a completely flexible plastic package. The off-aromas and liquids may thus stay inside the package even when the temperature is 120-130 °C. The valve would perhaps open if the temperature in the package was increased further, but in such case the food product would be overcooked. Another problem is that most available valves are composed of plastic and cannot tolerate temperatures above 140 °C.

In another embodiment of the invention, the gas phase temperature in the sealed package never exceeds 90 °C during step a). For example, it may never exceed 85, 80, 75 or 70 °C. This is achievable by controlling the ambient temperature during step a) and the subsequent sub-atmospheric pressure.

The sealed package may for example be heated for a time period of 5-180 min in step a). Further, step a) is carried out at approximately atmospheric pressure.

In other exemplary embodiments of the invention, steps b) and c) may be carried out in an autoclave capable of generating and maintaining the sub-atmospheric pressure of step b). Such autoclaves are for example marketed by Astell. In addition, step a) may be carried out in the same autoclave. An autoclave suitable for steps a), b) and c) comprises:
a housing defining a cavity capable of receiving food packages,
   wherein said housing is capable of maintaining a supra-atmospheric pressure and a sub-atmospheric pressure in the cavity;
a steam generating device for providing steam in the cavity;
at least one heating element for heating a package placed in the cavity, which at least one heating element is not part of the steam generating device;
a fan arrangement for circulating gas in the cavity; and
a gas outlet connectable to a vacuum source for withdrawing gas from the cavity.

The autoclave may further comprise a vacuum pump connected to the gas outlet.

In yet another exemplary embodiment, the method further comprises the step of:
d) releasing the pressure to obtain flash cooling of the food in the package from step c) and such that gas leave the sealed package from step c) through the valve.

Step d) thus results in that the package is further vacuumized after the autoclaving/sterilization step. Moreover, it further increases process efficiency, both in terms of output and energy since the time for cooling is reduced and the autoclave/oven can be loaded while it is still relatively warm. In conventional systems the packages are cooled within the autoclave/oven for a longer duration of time in order to keep the package from breaking.

Step d) may for example be carried out in an autoclave that also was used for step c) and optionally step b). Examples of such an autoclave are the above-mentioned autoclave(s) marketed by Astell. In one embodiment, steps a)-d) are all carried out in the same autoclave.

According to another exemplary embodiment, the method may further comprise the step of:
e) further cooling the package from step d) such that the food in the package reaches a temperature of 50 °C or lower, such as 40 °C or lower. This is in order to prevent further release of odours from the food inside the package and to maintain the taste and texture of the food. Step e) may be carried out at approximately atmospheric pressure.

The invention will be further apparent from and elucidated with reference to the embodiments described hereinafter.

### BRIEF DESCRIPTION OF THE DRAWINGS

The above, as well as additional, objects, features and advantages of the present invention will be better understood through the following illustrative and non-limiting detailed description of exemplary embodiments of the present invention, with reference to the appended drawings, wherein:
Fig. 1 illustrates a flow chart representation of a method in accordance with an embodiment of the present invention.
Fig. 2 illustrates a non-limiting embodiment of a vacuum autoclave.
Fig. 3 illustrates another non-limiting embodiment of a vacuum autoclave.

### DETAILED DESCRIPTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout the description.

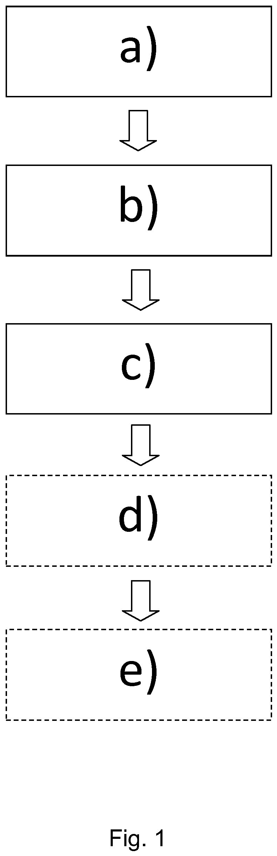

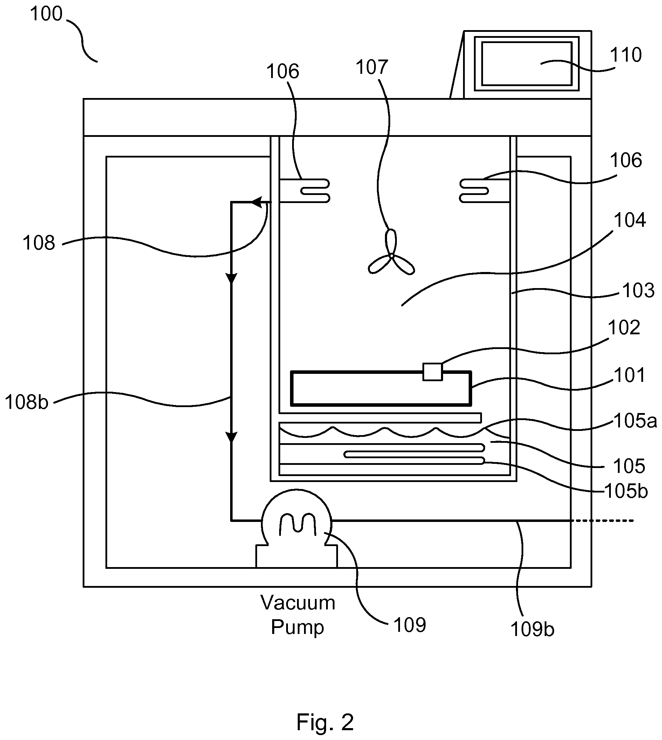

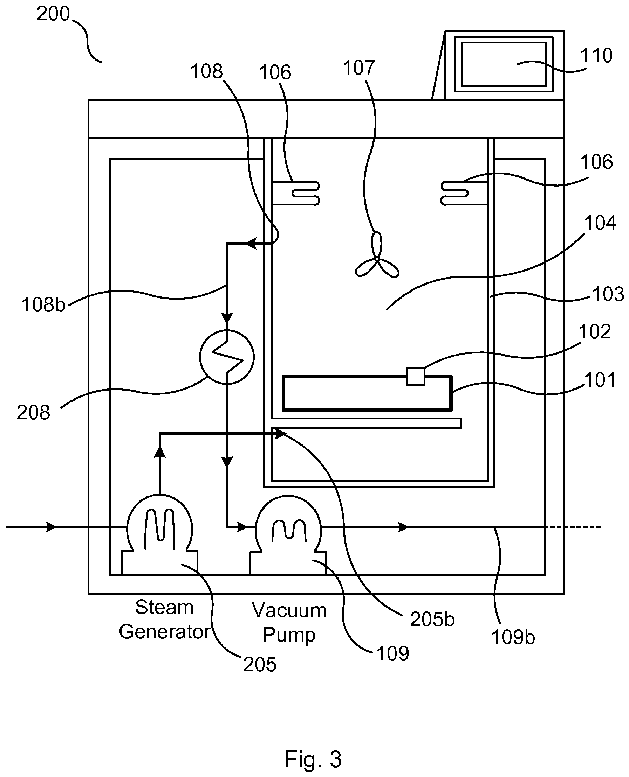

Fig. 1 shows a flow chart representation of a method of cooking and sterilization (or high-degree pasteurization) of food according to one exemplary embodiment of the invention. The food is arranged in a sealed package having a one-way valve that opens at a pressure difference of 20-200 mbar. The food in the sealed package may for example comprise vegetables, fish and/or transformed meat, such as pate. The package in the method may thus be prepared by arranging food in a package and then sealing the package. For example, the food may be placed in a tray, such as a plastic tray, that is then sealed with a plastic film. The method can for example be performed in an autoclave as will be described in more detail with reference to Figs. 2-3.

The method comprises the step of heating a) the sealed package in order to cook the food within the sealed package. The heating step a) may comprise dry heating, moist heating or a combination thereof. Consequently, steam may be applied during at least part of the first period (i.e. at least a part of the duration of the heating step a)).

Further, a step of subjecting b) the sealed package that has been heated to a sub-atmospheric pressure such that gas leaves the sealed package through the one-way valve is performed. During step b) the ambient pressure of the sealed packages may be decreased gradually. This may for example be the case if a vacuum autoclave is used and the gas outlet is coupled directly to a running vacuum pump. For example, the pressure may decrease continuously from atmospheric pressure to a target sub-atmospheric pressure, such as 500 mbar below atmospheric pressure. A benefit of a slower decrease of the pressure is that vigorous boiling in the package may be prevented. A problem of vigorous boiling is that the valve may be contaminated and lose its function. Accordingly, in one embodiment, the rate of pressure reduction after the first period never exceeds 500 mbar/min. For example, it may never exceed 250 mbar/min. In some embodiments, it never exceeds 100 mbar/min or 50 mbar/min.

Alternatively, the pressure may be pulsated during step b) to drive more gas out of the package. For example the pressure may be varied between a small sub-atmospheric pressure, such as less than 100 mbar below atmospheric pressure, and a pressure that is at least 400 mbar below atmospheric pressure.

When the sealed package is subjected to the sub-atmospheric pressure in step b), the valve opens and the food in the package is flash cooled, which may prevent over cooking.

Still further, the method comprises the step of autoclaving c) the sealed package that was subjected to a sub-atmospheric pressure in step b), at a supra-atmospheric pressure. To ensure an efficient sterilization, the ambient temperature of the package in step c) is above 100 °C, such as at least 110 °C, such as at least 120 °C. A typical autoclaving temperature is 121 °C. For example, the ambient temperature may be maintained above 100, 110 or 120 °C for at least 10 minutes. During step c), the ambient temperature corresponds to the ambient pressure as saturated steam is used as the heating medium. In one embodiment, the pressure is pulsated during step c) to further force gases out through the one-way valve. For example, the pressure may be varied between a small supra-atmospheric pressure of at least 0.5 bar, such as at least 1 bar above atmospheric pressure.

Furthermore, the method may include an additional step of releasing d) the pressure in order to obtain flash cooling of the food in the package from step c), by gas leaving the sealed package through the valve (one-way valve).

Next, the method may further comprise a step of further cooling e) the package from step d) such that the food in the package reaches a temperature of 50°C or lower, such as 40°C or lower.

Fig. 2 shows a non-limiting embodiment of a vacuum autoclave 100. The vacuum autoclave 100 is suitable for cooking and sterilization of food arranged in a sealed package 101 comprising a one-way valve 102 that opens at a pressure difference, normally at a pressure of 20-200 mbar, in accordance with the inventive method.

The vacuum autoclave 100 comprises a housing 103 that defines a cavity 104 capable of receiving the sealed food package 101. The housing 103 is openable, such that objects, e.g. the sealed food package 101, can be placed in the cavity 104 and taken out of it. The housing 103 is designed to maintain, in a closed configuration, a sub-atmospheric pressure, which is often somewhat inaccurately referred to as "vacuum", in the cavity 104. The housing 103 is thus provided with seals to prevent substantial amounts of air from leaking in when the sub-atmospheric pressure is provided in the cavity 104. The housing 103 is also designed to maintain, in a closed configuration, the supra-atmospheric (i.e. above atmospheric) pressure in the cavity 104 that is necessary for autoclaving, such as in step c) of the method of the present disclosure. Again, the seals prevent leakages.

The vacuum autoclave 100 further comprises a steam generating device 105 for providing steam in the cavity 104. In the present embodiment, the steam generating device comprises a heating element 105b in contact with liquid water 105a at the bottom of the cavity 104. When the heating element 105b is turned on, it boils the water 105a and provides steam in the cavity 104. As the cavity 104 is sealed, a supra-atmospheric pressure and thus temperatures above 100 °C can be provided.

The vacuum autoclave further comprises heating elements 106 arranged in the cavity. These heating elements 106 are not in contact with the liquid water 105a at the bottom of the cavity 104. The purpose of the heating elements 106 is thus not to generate steam (they are not part of the steam generating device 105), but to provide heat for a cooking step, such as step a) of the method of the present disclosure. To facilitate the heat transfer during such a cooking step, the vacuum autoclave further comprises a fan arrangement 107 for circulating gas in the cavity. The fan arrangement 107 may significantly shorten the cooking time. An alternative or complementary way of facilitating heat transfer and thereby shorten the cooking time is to increase the humidity of the air inside the cavity 104 during cooking.

To provide the sub-atmospheric pressure in the cavity 104, such as in step b) of the method of the present disclosure, the housing is provided with a gas outlet 108. Further, the vacuum autoclave 100 comprises a vacuum pump 109 connected to the gas outlet 108. The other end of the vacuum pump 109 is connected to a drain (not shown) via an outlet line 109b. The vacuum autoclave 100 may further comprise an interface 110, such as a screen, e.g. a touch screen, providing information about the operation of vacuum autoclave 100. The interface 110 may also allow the user to program the operation in the steam autoclave 100. For example, the user may set a temperature profile and/or a pressure profile for the operation. Such (a) profile(s) may depend on the type and the thickness of the packaged food.

Fig 2 shows another non-limiting embodiment of a vacuum autoclave 200. The vacuum autoclave 200 is suitable for cooking and sterilization of food arranged in a sealed package 101 comprising a one-way valve 102 that opens at a pressure difference, which is normally a pressure difference of 20-200 mbar, in accordance with the inventive method.

The vacuum autoclave 200 comprises a housing 103 that defines a cavity 104 capable of receiving the sealed food package 101. The housing 103 is openable, such that objects, e.g. the sealed food package 101, can be placed in the cavity 104 and taken out of it. The housing 103 is designed to maintain, in a closed configuration, a sub-atmospheric pressure, which is often somewhat inaccurately referred to as "vacuum", in the cavity 104. The housing 103 is thus provided with seals to prevent substantial amounts of air from leaking in when the sub-atmospheric pressure is provided in the cavity 104. The housing 103 is also designed to maintain, in a closed configuration, the supra-atmospheric pressure in the cavity 104 that is necessary for autoclaving, such as in step c) of the method of the present disclosure. Again, the seals prevent leakages.

The vacuum autoclave 200 further comprises a steam generator 205 for providing steam. The steam generator 205 comprises a water inlet and a boiler. The steam generator 205, which in the present embodiment is arranged outside the housing 104, is connected to a steam inlet 205b in the housing, such that the generated steam may be provided in the cavity. As the cavity 104 is sealed, a supra-atmospheric pressure and thus temperatures above 100 °C can be provided.

The vacuum autoclave further comprises heating elements 106 arranged in the cavity. These heating elements 106 are not part of the steam generator 205. The purpose of the heating elements 106 is thus not to generate steam, but to provide heat for a cooking step, such as step a) of the method of the present disclosure. To facilitate the heat transfer during such a cooking step, the vacuum autoclave 200 further comprises a fan arrangement 107 for circulating gas in the cavity. The fan arrangement 107 may significantly shorten the cooking time. An alternative or complementary way of facilitating heat transfer and thereby shorten the cooking time is to increase the humidity of the air inside the cavity 104 during cooking.

To provide the sub-atmospheric pressure in the cavity 104, such as in step b) of the method of the present disclosure, the housing is provided with a gas outlet 108. Further, the vacuum autoclave 200 comprises a vacuum pump 109 connected to the gas outlet 108 via a vacuum line 108b. A heat exchanger 208 may be arranged on the vacuum line 108b. The other end of the vacuum pump 109 is connected to a drain (not shown) via an outlet line 109b.

The vacuum autoclave 200 may further comprise an interface 110, such as a screen, e.g. a touch screen, providing information about the operation of vacuum autoclave 200. The interface 110 may also allow the user to program the operation in the steam autoclave 200. For example, the user may set a temperature profile and/or a pressure profile for the operation. Such (a) profile(s) may depend on the type and the thickness of the packaged food.

## Claims

1. A method of cooking and sterilization or high-degree pasteurization of food arranged in a sealed package comprising a one-way valve that opens at a pressure difference of 20-200 mbar, said method comprising the steps of:
a) heating the sealed package to cook the food;
b) subjecting the sealed package from step a) to a sub-atmospheric pressure such that gas leaves the sealed package through the valve; and
c) autoclaving the sealed package from step b) at a supra-atmospheric pressure.

2. The method according to claim 1, wherein steps b) and c) are carried out in an autoclave capable of generating and maintaining the sub-atmospheric pressure of step b).

3. The method according to claim 2, wherein step a) is also carried out in the autoclave.

4. The method according to any one of the preceding claims, further comprising the step of:
d) releasing the pressure to obtain flash cooling of the food in the package from step c) and such that gas leave the sealed package from step c) through the valve.

5. The method according to claim 4, wherein step d) is carried out in an autoclave used for step c).

6. The method according to any one of claims 4 or 5, further comprising the step of:
e) further cooling the package from step d) such that the food in the package reaches a temperature of 50 °C or lower, such as 40 °C or lower.

7. The method according to claim 6, wherein step e) is carried out at approximately atmospheric pressure.

8. The method according to any one of the preceding claims, wherein the food reaches a temperature of 50-110 °C, such as 55-80 °C, in step a).

9. The method according to any one of the preceding claims, wherein the temperature is at least 110 °C, such as at least 120 °C, in step c).

10. The method according to any one of the preceding claims, wherein the sub-atmospheric pressure of step b) is at least 200 mbar below atmospheric pressure, such as at least 300, 400, 500, 600, 700 or 800 mbar below atmospheric pressure.

11. The method according to any one of the preceding claims, wherein the sealed package is heated for a time period of 5-180 min in step a).

12. The method according to any one of the preceding claims, wherein step a) is carried out at approximately atmospheric pressure.

13. The method according to any one of the preceding claims, wherein the food comprises vegetables, fish and/or transformed meat, such as pate.

## Patentansprüche

1. Verfahren zum Kochen und Sterilisieren oder zur Hochtemperaturpasteurisierung von einem Nahrungsmittel, das in einer abgedichteten Verpackung vorgesehen ist, welche ein Einwegeventil umfasst, das sich bei einer Druckdifferenz von 20-200 mbar öffnet, wobei das Verfahren die folgenden Schritte umfasst:
a) Erhitzen der abgedichteten Verpackung, um das Nahrungsmittel zu kochen;
b) Aussetzen der abgedichteten Verpackung aus Schritt a) gegenüber einem Unterdruck, derart, dass Gas die abgedichtete Verpackung durch das Ventil verlässt; und
c) Autoklavieren der abgedichteten Verpackung aus Schritt b) bei einem Überdruck.

2. Verfahren nach Anspruch 1, wobei die Schritte b) und c) in einem Autoklav ausgeführt werden, der den Unterdruck von Schritt b) erzeugen und beibehalten kann.

3. Verfahren nach Anspruch 2, wobei der Schritt a) ebenfalls in dem Autoklav ausgeführt wird.

4. Verfahren nach einem der vorhergehenden Ansprüche, ferner umfassend den Schritt des:
d) Ablassens des Drucks, um eine Blitzkühlung des Nahrungsmittels in der Verpackung aus Schritt c) zu erzielen und derart, dass Gas die abgedichtete Verpackung aus Schritt c) durch das Ventil verlässt.

5. Verfahren nach Anspruch 4, wobei der Schritt d) in einem Autoklav ausgeführt wird, der für Schritt c) verwendet wird.

6. Verfahren nach einem der Ansprüche 4 oder 5, ferner umfassend den Schritt des:
e) weiteren Kühlens der Verpackung aus Schritt d), derart, dass das Nahrungsmittel in der Verpackung eine Temperatur von 50 °C oder niedriger, wie etwa 40 °C oder niedriger, erreicht.

7. Verfahren nach Anspruch 6, wobei der Schritt e) ungefähr bei Atmosphärendruck ausgeführt wird.

8. Verfahren nach einem der vorhergehenden Ansprüche, wobei das Nahrungsmittel eine Temperatur von 50-110 °C, wie etwa 55-80 °C, in Schritt a) erreicht.

9. Verfahren nach einem der vorhergehenden Ansprüche, wobei die Temperatur mindestens 110 °C, wie etwa mindestens 120 °C, in Schritt c) beträgt.

10. Verfahren nach einem der vorhergehenden Ansprüche, wobei der Unterdruck von Schritt b) mindestens 200 mbar unter Atmosphärendruck, wie etwa mindestens 300, 400, 500, 600, 700 oder 800 mbar unter Atmosphärendruck, beträgt.

11. Verfahren nach einem der vorhergehenden Ansprüche, wobei die abgedichtete Verpackung für einen Zeitraum von 5-180 Minuten in Schritt a) erhitzt wird.

12. Verfahren nach einem der vorhergehenden Ansprüche, wobei der Schritt a) ungefähr bei Atmosphärendruck ausgeführt wird.

13. Verfahren nach einem der vorhergehenden Ansprüche, wobei das Nahrungsmittel Gemüse, Fisch und/oder verarbeitetes Fleisch wie etwa Pastete umfasst.

## Revendications

1. Procédé de cuisson et stérilisation ou de pasteurisation à haut niveau d'aliments disposés dans un emballage scellé comprenant une valve unidirectionnelle qui s'ouvre à une différence de pression de 20-200 mbar, ledit procédé comprenant les étapes suivantes :
a) chauffer l'emballage scellé pour cuire les aliments ;
b) soumettre l'emballage scellé de l'étape a) à une pression sous-atmosphérique de sorte que du gaz quitte l'emballage scellé à travers la valve ; et
c) autoclaver l'emballage scellé de l'étape b) à une pression supra-atmosphérique.

2. Procédé selon la revendication 1, dans lequel les étapes b) et c) sont réalisées dans un autoclave capable de générer et conserver la pression sous-atmosphérique de l'étape b).

3. Procédé selon la revendication 2, dans lequel l'étape a) est également réalisée dans l'autoclave.

4. Procédé selon l'une quelconque des revendications précédentes, comprenant en outre l'étape suivante :
d) relâcher la pression pour obtenir un refroidissement éclair des aliments dans l'emballage de l'étape c) et de manière à ce que du gaz quitte l'emballage scellé de l'étape c) à travers la valve.

5. Procédé selon la revendication 4, dans lequel l'étape d) est réalisée dans un autoclave utilisé pour l'étape c).

6. Procédé selon l'une quelconque des revendications 4 ou 5, comprenant en outre l'étape suivante :
e) davantage refroidir l'emballage de l'étape d) de manière à ce que les aliments dans l'emballage atteignent une température de 50 °C ou moins, telle que 40 °C ou moins.

7. Procédé selon la revendication 6, dans lequel l'étape e) est réalisée approximativement à la pression atmosphérique.

8. Procédé selon l'une quelconque des revendications précédentes, dans lequel les aliments atteignent une température de 50-110 °C, telle 55-80 °C, à l'étape a).

9. Procédé selon l'une quelconque des revendications précédentes, dans lequel la température est au moins de 110 °C, telle qu'au moins de 120 °C, à l'étape c).

10. Procédé selon l'une quelconque des revendications précédentes, dans lequel la pression sous-atmosphérique de l'étape b) est au moins de 200 mbar en-dessous de la pression atmosphérique, telle qu'au moins de 300, 400, 500, 600, 700 ou 800 mbar en-dessous de la pression atmosphérique.

11. Procédé selon l'une quelconque des revendications précédentes, dans lequel l'emballage scellé est chauffé pour une période de temps de 5-180 min à l'étape a).

12. Procédé selon l'une quelconque des revendications précédentes, dans lequel l'étape a) est réalisée approximativement à la pression atmosphérique.

13. Procédé selon l'une quelconque des revendications précédentes, dans lequel les aliments comprennent des légumes, du poisson et/ou de la viande transformée, telle du pâté.
